# EUROPEAN PATENT SPECIFICATION

(11) **EP 0 607 020 B1**
(45) Date of publication and mention of the grant of the patent: **09.09.1998**
(21) Application number: 94300186.7
(22) Date of filing: 11.01.1994
(51) Int. Cl.: B32B 7/02, B32B 5/26, A41D 31/02

(54) **Composite fabric**
Textilverbundstoff
Etoffe composite

(30) Priority: 14.01.1993 GB 9300722
(43) Date of publication of application: 20.07.1994
(73) Proprietor: SUB ZERO TECHNOLOGY LIMITED, Fleckney, Leicestershire LE8 0UD (GB)
(72) Inventor: Laxton, Derek Arthur, Thurnby,Leicester LE7 9RL (GB)
(74) Representative: Jones, Stephen Anthony

(56) References cited:
- EP-A- 0 077 525
- DE-A- 3 820 096
- FR-A- 2 570 935
- US-A- 4 537 822
- US-A- 4 775 575
- US-A- 5 021 280

## Description

This invention relates to a composite fabric, in particular to such a fabric for use in cold and/or wet conditions, and to clothing and other articles manufactured using such a composite fabric.

It is known to employ composite fabrics for clothing and other articles such as sleeping bag liners to be used in extreme weather conditions, especially very cold conditions. Such composite fabrics typically comprise an inner layer of wicking fabric and an outer layer of vapour-impermeable fabric. The wicking fabric wicks moisture, eg perspiration, away from the body of the wearer or user. Such composite fabrics suffer from the disadvantage that, in time, moisture tends to accumulate within the fabric structure and the fabric loses its effectiveness as a thermal insulator.

DE-A-3820096 discloses an article of clothing made of a fabric comprising a waterproof outer layer and a lining separated by a ventilation layer with longitudinal and transverse air channels.

EP-A-0077525 discloses a sweat-absorbent textile fabric comprising a water-absorbent fabric layer having a high moisture absorbency and a water-permeable fabric layer having a low moisture absorbency and a high moisture permeability. The outer layer may be coated with a water-repellent resin.

There has now been devised a composite fabric which overcomes or substantially mitigates the above disadvantage.

According to the invention, a composite fabric structure comprises a layer of wicking fabric, an intermediate layer of vapour-permeable fabric and a layer of substantially vapour-impermeable fabric.

According to another aspect of the invention, there is provided an article which comprises a composite fabric structure comprising a layer of wicking fabric, and intermediate layer of vapour-permeable fabric and a layer of substantially vapour-impermeable fabric.

The article may be a garment, eg a jacket, or some other article such as a sleeping bag or sleeping bag liner.

The composite fabric and article according to the invention are advantageous in that they retain their effective thermal insulation properties throughout prolonged use.

In use, moisture passing through the vapour-permeable layer condenses in the space between the intermediate layer of vapour-permeable fabric and the vapour-impermeable layer. This space is, or can be, vented to the atmosphere. This enables moisture collected in that space to run off or evaporate. Alternatively, in cold conditions the moisture may simply be allowed to freeze and then removed by shaking and/or beating. The venting may be permanent, appropriate openings being provided, eg at an edge of the article, or else appropriate fasteners can be provided on such openings, eg zip or touch-and-close (VELCRO-type) fasteners, such that the openings are closed during normal use and opened only to remove collected moisture. To further facilitate removal of moisture, it may in some circumstances be desirable to turn the article inside out through the openings.

Since the layer of wicking fabric is, in the finished article, the innermost layer, it is arranged to wick moisture towards the intermediate layer. Suitable wicking fabrics are well-known. Examples are woven fabrics of polypropylene or polyamide.

Suitable vapour-permeable fabrics for the intermediate layer are also known. The vapour-permeable fabric may be nylon, which may be coated. The vapour-permeable fabric typically has a hydrostatic head of about 2 m.

The vapour-impermeable fabric, too, may be of known kind. One example is an impervious nylon fabric.

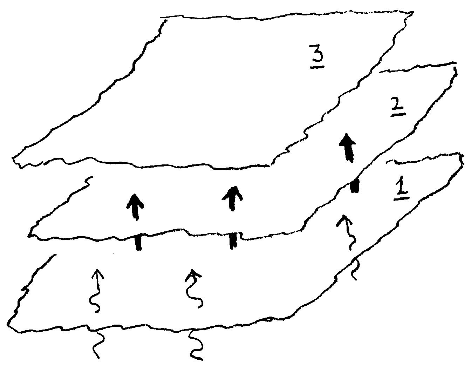

One embodiment of a composite fabric according to the invention will now be described, by way of illustration only, with reference to the accompanying drawing which shows a schematic view of the composite fabric.

Referring to the drawing, a composite fabric for use in a sleeping bag liner comprises three layers. The innermost layer 1 intended to be placed innermost in use, i.e. closest to the body, is a wicking layer of polypropylene fabric. The intermediate layer 2 is a vapour-permeable nylon with a hydrostatic head of about 2 m. The outermost layer 3, intended to be placed outermost in use, is substantially impermeable nylon.

In use, moisture such as perspiration from the user's body is wicked through the innermost layer 1 as shown by the wavy arrows and passes through the vapour-permeable layer 2 as shown by the straight arrows. The moisture condenses on the outermost layer 3 and collects in the space between the intermediate layer 2 and the outermost layer 3. That space is vented to the atmosphere, allowing the accumulated moisture to run off or evaporate or, if frozen, be dislodged by beating and shaking.

## Claims

1. A composite fabric structure comprising a layer of wicking fabric (1), an intermediate layer of vapour-permeable fabric (2) and a layer of substantially vapour-impermeable fabric (3).

2. A fabric structure as claimed in Claim 1, wherein the wicking fabric (1) is a woven fabric.

3. A fabric structure as claimed in Claim 2, wherein the wicking fabric (1) comprises polypropylene.

4. A fabric structure as claimed in Claim 2, wherein the wicking fabric (1) comprises polyamide.

5. A fabric structure as claimed in any preceding claim, wherein the vapour-permeable fabric (2) comprises nylon.

6. A fabric structure as claimed in any preceding claim, wherein the vapour-impermeable fabric (3) comprises nylon.

7. An article which comprises a composite fabric structure as claimed in any preceding claim.

8. An article as claimed in Claim 7, which is a garment.

9. An article as claimed in Claim 7 or Claim 8, wherein a space between the intermediate layer of vapour-permeable fabric (2) and the vapour-impermeable layer (3) is, or can be, vented to the atmosphere.

10. An article as claimed in Claim 9, wherein said space is vented via permanent openings in the article.

11. An article as claimed in Claim 9, wherein said space is vented by means of openings in the article, said openings being provided with fasteners such that the openings are closed during normal use and opened only to remove collected moisture.

## Patentansprüche

1. Verbundgewebestruktur, die eine Schicht aus Dochtstoffgewebe (1) umfasst, eine Zwischenschicht aus aus dampfdurchlässigem Gewebe, (2), und eine Schicht aus im wesentlichen dampfundurchlässigem Gewebe (3).

2. Gewebestruktur nach Anspruch 1, in der das Dochtgewebe (1) ein gewebtes Gewebe ist.

3. Gewebestruktur nach Anspruch 2, in der das Dochtgewebe (1) Polypropylen umfasst.

4. Gewebestruktur nach Anspruch 2, in der das Dochtgewebe (1) Polyamid umfasst.

5. Gewebestruktur nach einem vorhergehenden Anspruch, in der das dampfdurchlässige Gewebe (2) Nylon umfasst.

6. Gewebestruktur nach einem vorhergehenden Anspruch, in der das dampfundurchlässige Gewebe (2) Nylon umfasst.

7. Gegenstand, der eine Verbundgewebestruktur nach einem vorhergehenden Anspruch umfasst.

8. Gegenstand nach Anspruch 7, der ein Kleidungsstück ist.

9. Gegenstand nach Anspruch 7 oder Anspruch 8, in dem ein Raum zwischen der Zwischenschicht aus dampfdurchlässigem Gewebe (2) und der dampfundurchlässigen Schicht (3) zur Atmosphäre entlüftet wird oder entlüftet werden kann.

10. Gegenstand nach Anspruch 9, in dem der Raum über bleibende Öffnungen in dem Gegenstand entlüftet wird.

11. Gegenstand nach Anspruch 9, in dem der Raum durch Öffnungen in dem Gegenstand entlüftet wird, wobei die Öffnungen mit Befestigungsmitteln versehen sind, so dass die Öffnungen während nomaler Benutzung geschlossen sind, und nur geöffnet werden, um angesammelte Feuchtigkeit zu entfernen.

## Revendications

1. Structure textile composite comportant une couche de textile à effet de mèche (1), une couche intermédiaire de texte perméable à la vapeur (2) et une couche de textile essentiellement imperméable à la vapeur (3).

2. Structure textile telle que revendiquée à la revendication 1, suivant laquelle le texte à effet de mèche (1) est un textile tissé.

3. Structure textile telle que revendiquée à la revendication 2, suivant laquelle le texte à effet de mèche (1) comporte le polypropylène.

4. Structure texte telle que revendiquée à la revendication 2, suivant laquelle le texte à effet de mèche (1) comporte le polyamide.

5. Structure textile telle que revendiquée à l'une ou l'autre des revendications précédentes, suivant laquelle le textile perméable à la vapeur (2) comporte le nylon.

6. Structure textile telle que revendiquée à l'une ou l'autre des revendications précédentes, suivant laquelle le textile imperméable à la vapeur (3) comporte le nylon.

7. Article comportant une structure textile composite telle que revendiquée à l'une ou l'autre des revendications précédentes.

8. Article tel que revendiqué à la revendication 7 qui est un vêtement.

9. Article tel que revendiqué à la revendication 7 ou à la revendication 8, suivant laquelle un espace entre la couche intermédiaire de textile perméable à la vapeur (2) et la couche imperméable à la vapeur (3) prévoit, ou peut prévoir l'aération en atmosphère.

10. Article tel que revendiqué à la revendication 9, suivant laquelle ledit espace est aéré par l'intermédiaire d'ouvertures permanentes dans l'article.

11. Article tel que revendiqué à la revendication 9, suivant laquelle ledit espace est aéré au moyen d'ouvertures dans l'article, lesdites ouvertures étant prévues avec des fermetures telles que les ouvertures sont fermées à l'usage normal et ne sont ouvertes que pour éliminer l'humidité accumulée.
